# EUROPÄISCHE PATENTSCHRIFT

(11) **EP 3 114 721 B1**
(45) Veröffentlichungstag und Bekanntmachung des Hinweises auf die Patenterteilung: **16.01.2019**
(21) Anmeldenummer: 15710102.3
(22) Anmeldetag: 18.02.2015
(51) Int. Cl.: H01M 4/04, C25D 1/04, H01M 4/131, H01M 4/136, H01M 4/1391, H01M 4/1397, H01M 4/36, H01M 4/66, H01M 4/62, H01M 4/38, H01M 4/485, H01M 4/505, H01M 4/525, H01M 4/58, C25D 3/12, C25D 3/38, C23C 18/16, C23C 18/40

(54) **FOLIENVERBUNDMATERIAL**
FILM COMPOSITE MATERIAL
MATÉRIAU COMPOSITE EN FEUILLE

(30) Priorität: 03.03.2014 DE 102014003128
(43) Veröffentlichungstag der Anmeldung: 11.01.2017
(73) Patentinhaber: Hochschule Aalen Technik Und Wirtschaft, 73430 Aalen (DE)
(72) Erfinder: SÖRGEL, Timo, 73525 Schwäbisch Gmünd (DE); MEINHARD, Sandra, 73434 Aalen (DE); SÖRGEL, Seniz, 73525 Schwäbisch Gmünd (DE)
(74) Vertreter: Müller-Boré & Partner Patentanwälte PartG mbB
(86) Internationale Anmeldenummer: PCT/EP2015/000356
(87) Internationale Veröffentlichungsnummer: WO 2015/131977

(56) Entgegenhaltungen:
- WO-A1-2012/165051
- CN-A- 103 326 001
- DE-A1-102011 076 508
- JP-A- H08 213 021
- US-A- 3 715 285

## Beschreibung

Die vorliegende Erfindung betrifft ein Verfahren zur Herstellung eines Folienverbundmaterials mit einer Dicke im Bereich von 5 bis 50 µm, welches in einer Batterie gleichzeitig die Funktion als Stromsammler und als Elektrodenmaterial, insbesondere Kathodenmaterial, ausüben kann, wobei das Folienverbundmaterial aus einer Dispersoid-Metallmatrix-Hybridfolie aufgebaut ist, ein durch dieses Verfahren erhältliches Folienverbundmaterial sowie dessen Verwendung.

Zur Herstellung von Batterie-Kathoden, insbesondere solchen von Lithium-Schwefel-Batterien oder Lithium-Ionen-Batterien, wird bislang im Stand der Technik üblicherweise eine Mischung von (i) Aktivmaterial (elektrochemisch aktives Material), welches in der Regel eine zu geringe elektrische Eigenleitfähigkeit aufweist, d.h. beispielsweise Schwefel oder LiFePO₄, (ii) Bindematerial, z.B. elektrisch nichtleitende organische Polymere, und (iii) einer elektrisch leitfähigen Komponente, üblicherweise Kohlenstoffpartikel, CNTs oder Core-Shell-Partikel, auf einen zweidimensionalen Stromsammler (AI- oder Cu-Folie) beispielsweise mittels Rakeln oder Sprühtechnik aufgebracht. Die Funktion von Stromsammler (Zu- bzw. Ableitung der Elektronen hin zum äußeren Stromkreis, je nachdem ob ge- oder entladen wird) und Kathodenmaterial (üblicherweise ein Komposit aus Aktivmaterial, elektrisch leitfähiger Komponente und Bindematerial, wie vorstehend ausgeführt) ist klassischerweise baulich getrennt, d.h. die Aufgaben werden von verschiedenen Komponenten übernommen (Stromsammler: Metallfolie, Kathodenmaterial: auf die Metallfolie beschichteter Komposit).

Im Rahmen der vorliegenden Erfindung wird insofern unter einer Elektrode (Kathode oder Anode) die Kombination von Elektrodenmaterial und elektrischem Ableiter (Stromsammler) verstanden, wobei das Elektrodenmaterial (Kathoden- oder Anodenmaterial) elektrochemisches Aktivmaterial und Hilfsstoffe (z.B. Zusätze zur Erhöhung der elektrischen Leitfähigkeit, Bindematerial) umfasst.

Unter Batterien werden im Rahmen der vorliegenden Erfindung sowohl primäre Batterien als auch sekundäre Batterien (Akkumulatoren) verstanden.

Die im Stand der Technik verfügbaren Kathodenmaterialien bestehen üblicherweise aus etwa 15 bis 50 Gew.-% Bindematerial und elektrisch leitfähigen Füllpartikeln, so dass 50 bis 85 Gew.-% des Kathodenmaterials für das Aktivmaterial verbleiben. Insofern ist die erzielbare Energiedichte durch die Notwendigkeit der Zugabe dieser weiteren Komponenten beschränkt. Dies führt unter anderem letztlich dazu, dass die Energiedichte im Stand der Technik verfügbarer Akkumulatoren bzw. Batterien für entsprechend spezifische Anwendungen (z.B. für vollelektrifizierte PKWs oder Smartphones bzw. Tablets) derzeit zu gering ist.

Zudem ist die elektrische Anbindung des Aktivmaterials limitiert, da die Bindematerialmatrix selbst nichtleitend ist. Damit ist zwangsläufig immer nur ein Teil der Aktivmaterial-Partikel mit den elektrisch leitenden Füllpartikeln im Kontakt, während die restliche Oberfläche von der nichtleitenden Bindematerialmatrix bedeckt ist. Somit ist sowohl die mechanische als auch die elektrische Anbindung eingeschränkt. Zudem ist die elektrische Leitfähigkeit von Kohlenstoffpartikeln als elektrisch leitfähige Füllpartikel um mindestens eine Größenordnung geringer als beispielsweise von metallischem Kupfer. Zudem wird die Leitfähigkeit im Kathodenverbund weiter verringert, insofern der Leitungspfad immer über eine Vielzahl von Kohlenstoff/Kohlenstoff-Grenzflächen verläuft, wobei die tatsächliche Kontaktfläche und die Qualität der Anbindung gering sind.

Im Stand der Technik vorgeschlagene Ausführungsformen für Lithium-Schwefel-Batterien bestehen beispielsweise darin, Schwefelpartikel in einem Mehrkomponenten-Gemisch einzubinden, wobei die weiteren Komponenten jeweils unterschiedliche Funktionen mitbringen; vgl. DE 10 2011 002 720, DE 699 06 814 bzw. US 4,664,991. Dadurch verfügt der resultierende Kathodenverbund aber über eine geringe Gesamtleitfähigkeit und eine geringe mechanische Stabilität, woraus eine verringerte Energieeffizienz und eine mit zunehmender Zyklenzahl immer schlechter werdende Integrität des Kathodenverbundes resultieren. Letztere hat eine schnelle Abnahme der Kapazität und eine Zunahme der auftretenden Überspannungen im Lade- bzw. Entladevorgang zur Folge (Verschlechterung der Energieeffizienz).

DE 10 2011 076508 A1 beschreibt eine Elektrode, die ein elektrisch leitendes Grundelement, auf dessen Oberfläche eine Metalllage aufgebracht ist, wobei die Metalllage Partikel eines Aktivmaterials aufweist derart, dass wenigstens eine Teilmenge der Partikel zumindest teilweise aus der Oberfläche der Metalllage herausragt, umfasst.

Somit ist es eine Aufgabe der vorliegenden Erfindung, den Elektrodenaufbau insbesondere solcher Elektroden zu vereinfachen, bei denen das Aktivmaterial eine zu geringe elektrische Eigenleitfähigkeit aufweist, ohne dabei Additive zur Erhöhung der elektrischen Leitfähigkeit vorzusehen, wobei aber die resultierenden Batterieeigenschaften nicht beeinträchtigt werden sollen. Insbesondere soll eine verbesserte elektrische und mechanische Anbindung des Aktivmaterials erreicht werden. Des Weiteren ist es die Aufgabe der Erfindung, mittels eines neuen Verfahrens eine Elektrode, insbesondere Kathode, mit einem neuartigen Aufbau bereitzustellen, wobei auf den üblicherweise erforderlichen Einsatz von zusätzlichem Bindematerial und elektrisch leitfähigen Füllpartikeln verzichtet wird. Dabei soll die Kapazität, Energiespeicherdichte, Energieeffizienz und Zyklenfestigkeit solche Elektroden, insbesondere Kathoden, enthaltender Batterien beibehalten bzw. verbessert werden.

Diese Aufgabe wird durch die in den Ansprüchen gekennzeichneten Ausführungsformen gelöst.

Insbesondere wird gemäß Anspruch 1 ein Verfahren zur Herstellung eines Folienverbundmaterials mit einer Dicke im Bereich von 5 bis 50 µm, welches in einer Batterie gleichzeitig die Funktion als Stromsammler und als Elektrodenmaterial, insbesondere Kathodenmaterial, ausüben kann, wobei das Folienverbundmaterial eine Dispersoid-Metallmatrix-Hybridfolie ist, wobei das Dispersoid ein Aktivmaterial, ausgewählt aus
(i) Schwefel, Selen, Schwefel/Selen-Verbindungen, ausgewählt aus SesS, Se₅S₂, Se₅S₄, SeS, Se₃S₅, SeS₂, SeS₇ und SeS₂₀, oder Li₂Sₙ (1≤n≤8), oder
(ii) Lithiuminterkalationsverbindungen, ausgewählt aus LiMPO₄ (M = Fe, Mn, Co, Ni und deren Mischungen), LiMO₂ (M = Ni, Co, Mn und deren binäre bzw. ternäre Mischungen), LiNi_{1-y-z}Co_{y}M_{z}O₄ (M = Mg, AI, Mn, y+z = 0-1), LiNi_{y}Mn_{y}Co_{1-2y}O₂ (y=0-0,5), LiM_{1-y}[Li_{1/3}Mn_{2/3}]_{y}O₂ (M = Cr, Mn, Fe, Co, Ni oder deren Mischungen, y = 0-1), LiM₂O₄ (M = Mn, Ti, V, wobei diese teilweise durch ein oder mehrere andere Übergangsmetallionen ersetzt sein können), LiₓV₂O₅ (0<x≤3) oder LiₓV₆O₁₃ (0<x≤6), und
die Metallmatrix ein elektrisch leitfähiges Material, ausgewählt aus Metallen oder metallischen Legierungen, umfasst, mit der Maßgabe, dass kein zusätzliches Bindematerial und keine zusätzlichen elektrisch leitfähigen Füllpartikel in dem Folienverbundmaterial vorhanden sind,
umfassend eine Kombination von Galvanoformung und Dispersionsabscheidung, worin bei der Galvanoformung in den Elektrolyten, aus welchem das die Metallmatrix aufbauende elektrisch leitfähige Material erzeugt wird, zusätzlich das Dispersoid eingebracht wird, so dass das Dispersoid bei der Galvanoformung mit in die sich abscheidende Schicht der Metallmatrix eingelagert wird, und anschließend die abgeschiedene Schicht als Folie vom dem entsprechenden Trägermaterial, auf welche sie abgeschieden wird, abgezogen wird, bereitgestellt.

Des Weiteren wird gemäß Anspruch 8 ein Folienverbundmaterial, erhältlich durch das vorstehende Verfahren, bereitgestellt.

Die vorliegende Erfindung betrifft somit ein Verfahren zur Herstellung eines solchen Folienverbundmaterials, wobei das Verfahren auf einer Kombination von Galvanoformung und Dispersionsabscheidung basiert, worin bei der Galvanoformung in den Elektrolyten, aus welchem das die Metallmatrix aufbauende elektrisch leitfähige Material erzeugt wird, zusätzlich das Dispersoid eingebracht wird, so dass das Dispersoid bei der Galvanoformung mit in die sich abscheidende Schicht der Metallmatrix eingelagert wird.

Die erfindungsgemäße Folie besteht gänzlich aus einem Verbundmaterial, welches nicht nur als Elektrodenmaterial fungieren kann, sondern selbst die Funktion des Stromsammlers übernimmt. Bei Anwendungen in entsprechenden Batterien (Lithium-Ionen-Batterien, Lithium-Schwefel-Batterien) geht dies mit einer deutlichen Gewichtseinsparung einher. Verfahrenstechnisch wird die erfindungsgemäße Folie (Folienverbundmaterial) galvanogeformt, d.h. sie wird zunächst auf einem elektrisch leitfähigen Substrat abgeschieden und nach kurzer Verweildauer aber wieder mechanisch von diesem abgezogen.

Der erfindungsgemäße neue Ansatz besteht somit insbesondere darin, die elektrische Leitfähigkeit des Stromsammlers sowohl für die Ableitung der Elektronen (entspricht der klassischen Aufgabe) als auch für die Kontaktierung des Aktivmaterials zu verwenden. Dies beinhaltet erfindungsgemäß, auf organische Bindemittel und Leitfähigkeitsadditive zu verzichten, wenn die Aktivmaterialpartikel direkt in den Stromsammler eingebunden sind. Um das Aktivmaterial ausreichend an den Stromsammler anzubinden, wird der Stromsammler in einem Galvanoformungsprozess aufgebaut, wobei simultan das Aktivmaterial (Dispersoid) in den galvanogeformten Stromsammler eingebunden wird. Es handelt sich also um eine Verfahrenskombination aus Galvanoformung und Dispersionsabscheidung.

Wie vorstehend ausgeführt, erfüllt im Stand der Technik der Stromsammler die Aufgabe, das Kathodenmaterial elektrisch zu kontaktieren und mechanisch zu stabilisieren. Insofern ist es ein wesentliches Merkmal der vorliegenden Erfindung, dass das erfindungsgemäße Folienverbundmaterial gleichzeitig die Funktionen von Stromsammler und Kathodenmaterial ausüben kann, d.h. gleichzeitig Stromsammler und Kathodenmaterial darstellt. Durch die direkte Anbindung bzw. mechanische Verklammerung von Dispersoid an den mechanisch wesentlich stabileren und elektrisch wesentlich besser leitenden Stromsammler werden die bekannten Nachteile des oben beschriebenen Kathodenaufbaus beseitigt. Außerdem entfällt der aufwendigere, mehrstufige Herstellungsprozess. Vielmehr wird das Herstellungsverfahren vereinfacht, da sich das erfindungsgemäße Folienverbundmaterial vollständig in einer kontinuierlichen arbeitenden Anlage zur Galvanoformung von Metallfolien, welche für die Dispersionsabscheidung eingerichtet bzw. optimiert worden ist, galvanoformen lässt.

Als Aktivmaterial der vorstehenden Gruppe (i) können Schwefel, Selen, Schwefel/Selen-Verbindungen, ausgewählt aus SesS, Se₅S₂, Se₅S₄, SeS, Se₃S₅, SeS₂, SeS₇, SeS₂₀, oder Li₂Sₙ (1≤n≤8), eingesetzt werden.

Als Aktivmaterial der vorstehenden Gruppe (ii) können Lithiuminterkalationsverbindungen, ausgewählt aus LiMPO₄ (M = Fe, Mn, Co, Ni und deren Mischungen) [vgl. Whittingham, M. Stanley, Chem. Rev. 2004, 104, 4271-4302], LiMO₂ (M = Ni, Co, Mn und deren binäre bzw. ternäre Mischungen), LiNi_{1-y-z}Co_{y}M_{z}O₄ (M = Mg, Al, Mn, y+z = 0-1), LiNi_{y}Mn_{y}Co_{1-2y}O₂ (y=0-0,5) [vgl. Daniel, Besenhard, Handbook of Battery Materials, Wiley, Weinheim, 2011; R. Diminko, M. Gaberscek et al., J. Power Sources 2003, 119-121, 770-773], LiM₁-y[Li_{1/3}Mn_{2/3}]_{y}O₂ (M = Cr, Mn, Fe, Co, Ni oder deren Mischungen, y = 0-1), LiM₂O₄ (M = Mn, Ti, V, wobei diese teilweise durch ein oder mehrere andere Übergangsmetallionen ersetzt sein können), wobei Lithium auch in allen Fällen in reversiblem Maße teilweise deinterkaliert sein kann bzw. im Falle von LiₓV₂O₅ (0<x≤3) und LiₓV₆O₁₃ (0<x≤6) auch vollständig deinterkaliert sein kann (x = 0), eingesetzt werden.

Als Metallmatrix kommen grundsätzlich alle elektrisch leitenden Materialien, die sich galvanisch auf einem Trägersubstrat abscheiden und nachfolgend mechanisch wieder ablösen lassen, in Frage. Gemäß der vorliegenden Erfindung werden als Metallmatrix Metalle bzw. metallische Legierungen vorgesehen. Beispiele für typische Metallmatrices, jeweils galvanisch aufgebracht, sind: Kupfer, Nickel, Zinn, Cobalt, Eisen, Silber oder Aluminium (Cu, Ni, Sn, Co, Fe, Ag oder Al). Es können auch Legierungen dieser Elemente untereinander bzw. mit weiteren Metallen und/oder Nichtmetallen verwendet werden. Beispiele für Letzteres sind Ni/P, Ni/B, oder Cu/Zn. In einer bevorzugten Ausführungsform ist die Metallmatrix aus Aluminium, Kupfer oder Nickel aufgebaut.

Es können auch Multilayer- bzw. Gradientenschichten aus den oben aufgeführten Matrixmaterialien verwendet werden.

In einer bevorzugten Ausführungsform der vorliegenden Erfindung ist das als Dispersoid eingesetzte Aktivmaterial funktionalisiert, und zwar vorzugsweise durch Kompositbildung bzw. Kern-Schale-Bildung mit einem intrinsisch leitfähigen organischen Oligomer bzw. Polymer. Der Zweck dieser Funktionalisierung besteht unter anderem darin, die Benetzbarkeit der Aktivmaterialien zu steigern und die Einbaurate der Aktivmaterial-Partikel in die Dispersoid-Metallmatrix-Hybridschicht zu erhöhen. Zudem kann dadurch eine feinere Verteilung der Aktivmaterial-Partikel erreicht werden. Zwar kann dies auch durch Zugabe entsprechender grenzflächenaktiver Substanzen (z.B. zur gezielten Beeinflussung der Hydrophilizität) erreicht werden, jedoch hat sich im Rahmen der vorliegenden Erfindung eine solche Funktionalisierung der Aktivmaterialien als vorteilhaft erwiesen.

Zur Funktionalisierung der in Gruppe (i) bzw. (ii), insbesondere in Gruppe (i), aufgeführten Aktivmaterialien (Schwefel bzw. schwefelhaltige Materialien) werden vorzugsweise intrinsisch leitfähige organische Polymere, ausgewählt aus Polythiophen, Polypyrrol, Polyanilin, Polyacetylen, Poly(para-phenylen), Poly(para-phenylen-vinylen), Poly[1,4-di(1,3-dithiolan-2-yl)-benzol] (PDDTB) oder Poly(2,2'-dithioanilin) (PDTDA), bzw. deren Oligomere eingesetzt. Die Funktionalisierung von beispielsweise Schwefel bzw. schwefelhaltigen Materialien ist im Stand der Technik bekannt; vgl. insbesondere Wu et al., J. Phys. Chem. C 2011, 115, 6057-6063.

In einer bevorzugten Ausführungsform der vorliegenden Erfindung werden als Dispersoid (Aktivmaterial) funktionalisierte Schwefelpartikel eingesetzt, wobei die Funktionalisierung der Schwefelpartikel besonders bevorzugt durch Kompositbildung mit Oligo- bzw. Polythiophen oder Oligo- bzw. Polypyrrol erzeugt worden ist.

Dabei kann der Schwefel vorzugsweise in dem Kompositmaterial nano- oder mikroskalig verteilt vorliegen. Aufgrund der damit verbundenen besseren elektrochemischen Zugänglichkeit (größeres Oberfläche/Volumen-Verhältnis) ist eine möglichst feine Verteilung des Schwefels vorteilhaft. In der Regel sind die Kompositmaterial-Partikel selbst in der Größenordnung d₅₀=20µm, was bei einer feinen Verteilung von Schwefel innerhalb der Partikel nicht nachteilig ist. Im Hinblick darauf, dass eine hohe Schwefelflächenbeladung erzielt und keine Partikel vollständig von der Metallmatrix umwachsen werden sollen, ist eine solche homogene Verteilung innerhalb eines größeren Partikels vorteilhaft.

Der Anteil der funktionalisierten Schwefelpartikel in dem Folienverbundmaterial liegt üblicherweise im Bereich von 10-40 Gew.-%, bezogen auf das Gewicht des Folienverbundmaterials. Gegenüber den im Stand der Technik verfügbaren Kathodenmaterialien lässt sich insofern eine deutliche höhere flächenbezogene Energiedichte (Schwefelbeladung) und eine deutlich höhere volumetrische Energiedichte, bezogen auf Stromsammler und Aktivmaterial bzw. Stromsammler und Kathodenmaterial, erreichen.

Das erfindungsgemäße Verbundmaterial liegt als Folie in einer Dicke im Bereich von 5 bis 50 µm, bevorzugt 8 bis 30 µm, vor. Die Dicke der Dispersoid-Metallmatrix-Hybridfolie hängt im Wesentlichen von der eingesetzten Partikelgröße ab. Das erfindungsgemäße Folienverbundmaterial zeichnet sich dadurch aus, dass es kein zusätzliches (organisches) Bindematerial und keine elektrisch leitfähigen Füllpartikel, wie z.B. Kohlenstoffpartikel, etc., enthält.

Erfindungsgemäß wird das als Stromsammler/Elektrode, insbesondere Stromsammler/Kathode, verwendbare Folienverbundmaterial in nur einem Schritt durch Galvanoformung hergestellt, wobei mittels Dispersionsabscheidung Aktivmaterial mit in die sich abscheidende Metallmatrix-Schicht, z.B. aus Aluminium, Kupfer oder Nickel, eingelagert werden. Die Dispersionsabscheidung ist eine Verfahrensvariante der galvanischen Abscheidung, bei der in den Elektrolyten zusätzlich Dispersoide unter Bildung einer Suspension eingebracht werden. Unter optimierten Bedingungen (geeignete Zusammensetzung der Metallmatrix, Partikelgröße, Oberflächenfunktionalisierung der Partikel, Partikelkonzentration, Konvektion des Elektrolyten, Abscheiderate etc.) werden diese Dispersoide homogen mit in die sich abscheidende Schicht eingelagert. Die Dispersoide adsorbieren dabei in einem statistischen Prozess auf der Substratoberfläche. Während ihrer Adsorptionszeit werden sie so weit von der simultan aufwachsenden Schicht umwachsen, dass sie ausreichend mechanisch angebunden sind, so daß sie nicht mehr von der Oberfläche desorbieren, gleichzeitig aber ihre elektrochemische Zugänglichkeit jedoch im Wesentlichen erhalten bleibt.

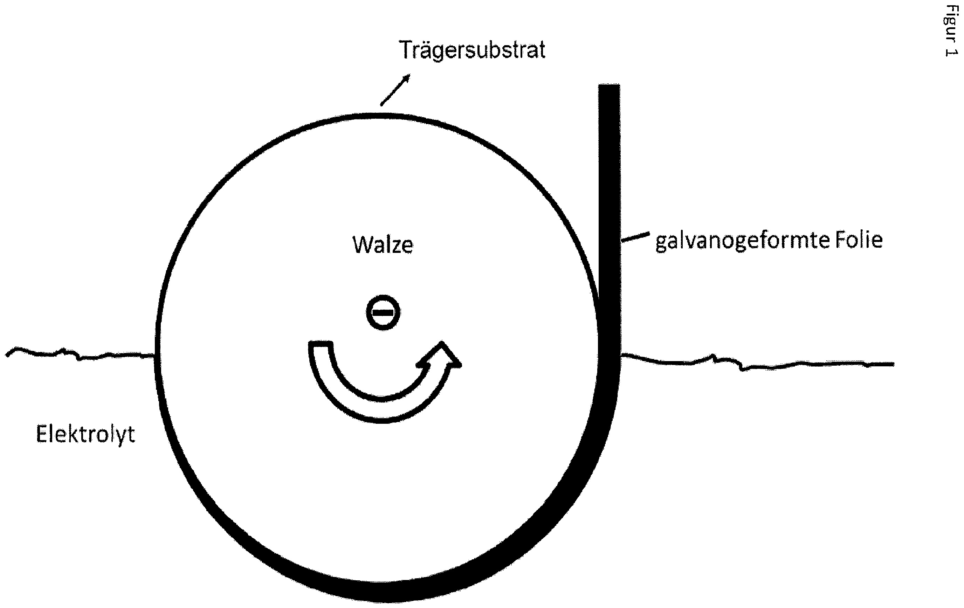

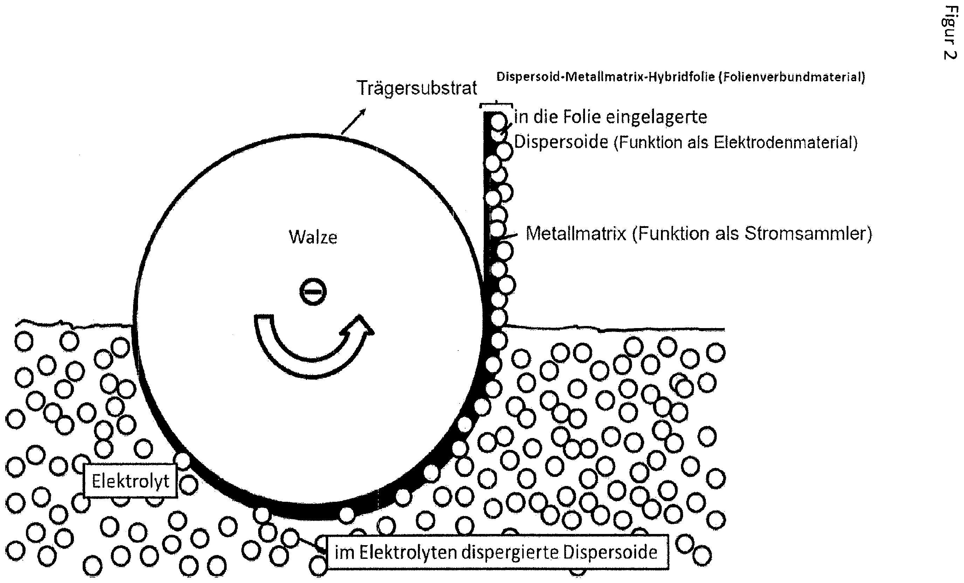

Wie vorstehend bereits ausgeführt, lässt sich das Folienverbundmaterial in einem einstufigen Herstellungsprozess durch geringe Modifikation gängiger Folien-Galvanoformungsanlagen herstellen, womit eine schnelle technische Umsetzbarkeit und geringe Herstellkosten einhergehen. Dabei wird das Folienverbundmaterial vollständig durch eine Verknüpfung von Galvanoformung und Dispersionsabscheidung aufgebaut. Dazu wird das Folienverbundmaterial kontinuierlich auf ein kathodisches Trägersubstrat, z.B. eine Walze aus hochlegiertem Stahl oder Titan, abgeschieden, von dem das Folienverbundmaterial zugleich nach Erreichen der gewünschten Gesamtdicke kontinuierlich in Form einer Folie abgezogen wird; vgl. Fig. 1. Dieser Galvanoformungsschritt wird erfindungsgemäß derart modifiziert, dass neben dem abgeschiedenen Metall bzw. der abgeschiedenen Legierung simultan, wie für die Dispersionsabscheidung typisch, in einem statistischen Prozess Dispersoide (Aktivmaterial) homogen eingelagert werden (vgl. Fig. 2).

Der Herstellungsprozess kann sowohl diskontinuierlich (Chargenprozess) als auch kontinuierlich (z.B. auf einer Walze) durchgeführt werden.

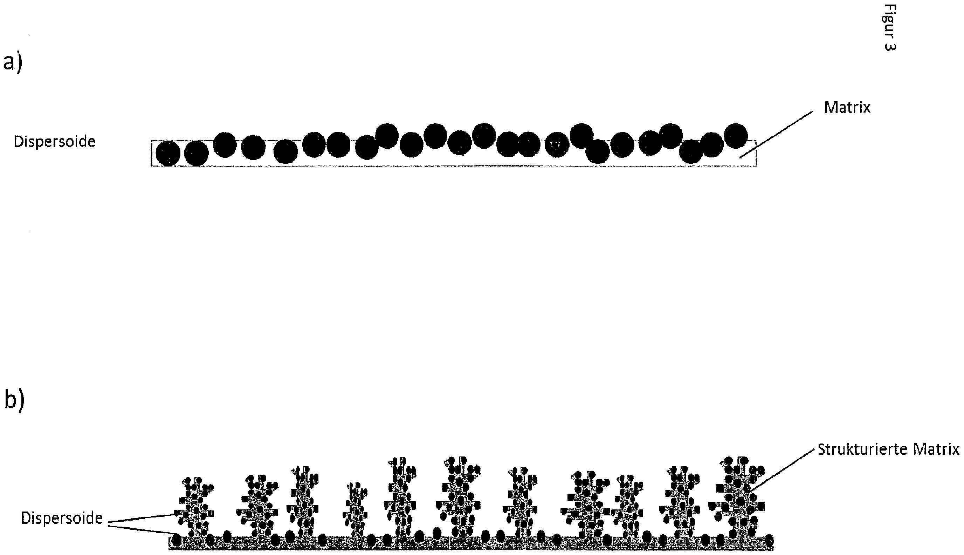

Die Schichten können außerdem durch geeignete Wahl der Abscheidungsparameter so abgeschieden werden, dass die Oberfläche des Folienverbundmaterials dreidimensional strukturiert ist (vgl. Figuren 3, 4 und 5), wodurch die elektrochemische Zugänglichkeit des Aktivmaterials gesteigert wird, was eine verbesserte Zyklenfestigkeit und Energieeffizienz zur Folge hat. Diese Strukturierung ist für die Realisierung hoher Batterie-Stromdichten vorteilhaft und kann beispielsweise durch geeignete Kombination von Stromdichte, Konvektion und Temperatur während der Abscheidung erzielt werden.

Die Abscheidung der Metallmatrices erfolgt auf galvanotechnischem Weg. Dabei wird die Matrix durch Reduktion von Ionen abgeschieden, wobei die dafür erforderlichen Elektronen aus einer Stromquelle (galvanisches Verfahren) stammen. Grundsätzlich wäre aber auch eine Abscheidung der Matrices auf chemischem Weg möglich. Dabei wird die Matrix durch Reduktion von Ionen abgeschieden, wobei die dafür erforderlichen Elektronen aus einem Reduktionsmittel (chemisches Verfahren) stammen. Bei der chemischen Reduktion stammen die Elektronen in der Regel aus einem der Lösung zugesetzten Reduktionsmittel, sie können in besonderen Fällen aber auch aus dem zu beschichtenden Substrat oder einem mit diesem in elektrisch leitfähigem Kontakt stehenden, unedleren Metall stammen. Letztere Fälle werden insbesondere als Zementation bzw. Kontaktabscheidung bezeichnet.

Gemäß dem Verfahren der vorliegenden Erfindung werden üblicherweise wässrige Elektrolyte verwendet, es können aber auch nichtwässrige Lösungsmittel bzw. Lösungsmittelgemische eingesetzt werden, insbesondere wenn das Dispersoid hydrolyseempfindlich ist. Außerdem ist die Abscheidung aus Salzschmelzen möglich, wobei hier auch insbesondere ionische Flüssigkeiten eingesetzt werden können. Dabei kann das Verfahren auch bei Temperaturen kleiner 100°C in sogenannten RT-Ils (room temperature ionic liquids) durchgeführt werden. Es können auch Mischungen aus ionischen Flüssigkeiten und nichtwässrigen Lösungsmitteln eingesetzt werden. Die gängigen galvanischen Abscheidungsverfahren sind hinlänglich in der Fachliteratur beschrieben.

Die Konzentration des Dispersoids in dem Elektrolyten wird üblicherweise in dem Bereich von 5 bis 100 g/L eingestellt.

Die Schichtabscheidung kann ohne weiteres angepasst werden. So können in je nach Matrixmaterial Stromdichten im Bereich von bis zu 10 A/dm² eingerichtet werden, wohingegen in optimierten Industrieanlagen Stromdichten bis zu 100 A/dm² erreicht werden können.

Als Trägersubstrate können beispielsweise solche auf Basis von hochlegiertem Stahl oder Titan, jeweils in der Regel poliert, eingesetzt werden. Von solchen Trägersubstraten lassen sich nach geeigneter Vorbehandlung die erfindungsgemäß hergestellten Folienverbundmaterialien in der Regel einfach ablösen.

Um ein Absetzen der Dispersoid-Partikel an von der Elektrolytumwälzung wenig erfassten Stellen der Beschichtungswanne zu verhindern, wird in der Regel eine spezielle Wannengeometrie eingerichtet, welche keine waagerechten Bereiche aufweist. Üblicherweise wird der Elektrolyt in geeigneter Weise umgewälzt, um in allen Bereichen der Beschichtungswanne eine gleichbleibende Partikelkonzentration sicherzustellen. Dies kann z.B. durch einfaches Umpumpen oder durch Lufteinblasung erfolgen. Eine ausführliche Beschreibung der Merkmale der Dispersionsabscheidung und der erforderlichen Anlagentechnik findet sich in T. Sörgel, J. Meyer, WOMag 2013 (9), 2, 24, Chemische und elektrochemische Dispersionsbeschichtung - Technologie, Anwendungen und Potential.

Im Anschluß an die Beschichtung und Ablösung vom Trägersubstrat kann eine derartig hergestellte erfindungsmäße Folie gegebenenfalls einseitig oder beidseitig geätzt werden, um die Dispersoid-Partikel freizulegen. Eine Ätzung auch der Rückseite kann beispielsweise bei der nachfolgenden Verwendung in mehrlagigen Zellen wie Wickel- oder Pouchzellen vorgesehen werden.

Ein weiterer Gegenstand der vorliegenden Erfindung betrifft die Verwendung des erfindungsgemäßen Folienverbundmaterials als Kathode und Stromsammler zugleich in einer Lithium-Schwefel-Batterie, unter der Maßgabe, dass das Dispersoid aus der Gruppe (i) ausgewählt ist, bzw. die Verwendung des erfindungsgemäßen Folienverbundmaterials als Kathode und Stromsammler zugleich in einer Lithium-Ionen-Batterie, wenn das Dispersoid aus der Gruppe (ii) ausgewählt ist. Mit anderen Worten, auf den "klassischen" herkömmlichen Stromsammler kann in diesen Ausführungsformen verzichtet werden, was mit einer signifikanten Gewichtseinsparung einhergeht.

Die Figuren zeigen:
Fig. 1 eine schematische Darstellung der Galvanoformung einer Folie in einem kontinuierlichen Prozess;
Fig. 2 eine schematische Darstellung der Kombination aus Galvanoformung und Dispersionsabscheidung zur Herstellung eines erfindungsmäßen Folienverbundmaterials, d.h. einer Dispersoid-Metallmatrix-Hybridfolie, in einem kontinuierlichen Prozess;
Fig. 3 einen schematischen Aufbau eines erfindungsgemäßen Folienverbundmaterials (a) ohne und (b) mit dreidimensional strukturierter Oberfläche;
Fig. 4 eine REM-Aufnahme der im nachstehenden Ausführungsbeispiel 3 hergestellten Folienverbundmaterialfolie mit Polythiophen-funktionalisierten Schwefelpartikeln;
Fig. 5 eine REM-Aufnahme einer in Anlehnung an Ausführungsbeispiel 3 hergestellten Folienverbundmaterialfolie mit Polypyrrol-funktionalisierten Schwefelpartikeln; und
Fig. 6 die auf die Schwefelmasse bezogene, spezifische Kapazität in Abhängigkeit der Zyklenzahl für eine erfindungsgemäße Kathode, bestehend aus Dispersoid-Kupfermatrix-Hybridfolie mit Pyrrol-funktionalisieren Schwefel-Partikeln.

Die vorliegende Erfindung wird durch die nachfolgenden Ausführungsbeispiele näher erläutert.

### A. Allgemeine Vorschrift zur Synthese funktionalisierter Schwefel-Partikel

Schwefel wird in einem geeigneten Lösungsmittel (organisch, alkoholisch oder wässrig) suspendiert oder gelöst und mit einem gelösten, suspendierten oder festen Katalysator oder Initiator der Polymerisationsreaktion gemischt. Bei geeigneter Temperatur (beispielsweise Raumtemperatur, ϑ = 0 °C, ϑ = -20 °C oder Siedehitze) wird ein gelöstes, suspendiertes oder festes Monomer (beispielsweise Thiophen, Pyrrol) zugefügt. Die Verhältnisse der Edukte können dabei unterstöchiometrisch, stöchiometrisch oder überstöchiometrisch sein. Die Reaktionsmischung wird bei geeigneter Temperatur (beispielsweise Raumtemperatur) einige Zeit (beispielsweise t = 24 h) gerührt. Anschließend wird die Polymerisation gegebenenfalls durch mehrmalige Zugabe eines Abbruchreagenzes (beispielsweise Methanol und/oder Wasser) beendet. Gegebenenfalls wird die Reaktionsmischung eingeengt. Der erhaltene Feststoff wird von der Reaktionsmischung abgetrennt (beispielsweise durch Filtration) und anschließend durch mehrmaliges Waschen (beispielsweise mit verdünnter Salzsäure) von Katalysatorresten befreit. Nachdem der Feststoff neutral gewaschen wurde, wird er (beispielsweise bei einer Temperatur von ϑ = 50 °C und einem Druck von p = 3 mbar) bis zur Gewichtskonstanz getrocknet.

### Ausführungsbeispiel 1: Synthese Polvthiophen-funktionalisierter Schwefelpartikel

Unter Schutzgasatmosphäre wird in einen 500 mL Dreihalskolben Schwefel (5,01 g, 156 mmol, Sigma-Aldrich Chemie GmbH, Taufkirchen, Reinheit ≥ 99,5%) und wasserfreies Eisen(III)chlorid (5,36 g, 33 mmol, Merck KGaA, Darmstadt, Reinheit ≥ 98 %) vorgelegt. Nach Zugabe von 50 mL Chloroform (wasserfrei, Sigma-Aldrich Chemie GmbH, Taufkirchen) wird für einen Zeitraum von t = 30 min bei Raumtemperatur gerührt. Anschließend wird die Suspension auf eine Temperatur von ϑ = 0 °C abgekühlt und Thiophen (1,39 g, 17 mmol, Sigma-Aldrich Chemie GmbH, Taufkirchen, Reinheit ≥ 99 %) in 25 mL Chloroform über einen Zeitraum von t = 60 min zugetropft. Die Reaktionsmischung wird für einen Zeitraum von weiteren t = 8 h bei einer Temperatur von ϑ = 0 °C und anschließend über Nacht bei Raumtemperatur gerührt. Danach wird der Reaktionsmischung 50 mL Methanol zugesetzt und der Feststoff abfiltriert. Der Feststoff wird erneut mit 50 mL Methanol gewaschen. Der so erhaltene Rückstand wird in einem 500 mL Kolben mit 200 mL Salzsäure (1 molar, Merck KGaA, Darmstadt, technisch) versetzt und für einen Zeitraum von ϑ = 30 min gerührt. Die funktionalisierten Schwefelpartikel werden erneut abfiltriert, mit demin. Wasser neutral gewaschen und bis zur Gewichtskonstanz getrocknet.

Das Beispiel wurde mit anderen Eisen(III)chlorid-Mengen (17 mmol) und anderen Thiophen-Mengen im Bereich von 8-32 mmol wiederholt.

### Ausführungsbeispiel 2: Synthese Polypyrrol-funktionalisierter Schwefelpartikel

Unter Schutzgasatmosphäre wird in einen 500 mL Dreihalskolben Schwefel (15,0 g, 468 mmol, Sigma-Aldrich Chemie GmbH, Taufkirchen, Reinheit ≥ 99,5 %) und wasserfreies Eisen(III)chlorid (16,08 g, 99 mmol, Merck KGaA, Darmstadt, Reinheit ≥ 98 %) vorgelegt. Nach Zugabe von 125 mL Chloroform (wasserfrei, Sigma-Aldrich Chemie GmbH, Taufkirchen) wird für einen Zeitraum von t = 30 min bei Raumtemperatur gerührt. Anschließend wird die Suspension auf eine Temperatur von ϑ = -20 °C abgekühlt und Pyrrol (1,67 g, 25 mmol, Sigma-Aldrich Chemie GmbH, Taufkirchen, Reinheit ≥ 99 %) in 25 mL Chloroform über einen Zeitraum von t = 5 h zugetropft. Die Reaktionsmischung wird weiterhin für einen Zeitraum von t = 48 h bei Raumtemperatur gerührt. Danach wird der Reaktionsmischung 150 mL Methanol zugesetzt und der Feststoff abfiltriert. Der Feststoff wird in einem 500 mL Kolben mit 300 mL Salzsäure (1 molar, Merck KGaA, Darmstadt, technisch) versetzt und für einen Zeitraum von t = 45 min gerührt. Die funktionalisierten Schwefelpartikel werden erneut abfiltriert, mit demin. Wasser neutral gewaschen und bis zur Gewichtskonstanz getrocknet.

### B. Allgemeines Beispiel zur Abscheidung von Aktivmaterial über Dispersionsabscheidung (Labormaßstab)/Aufbau des erfindungsgemäßen Folienverbundmaterials

In einem Elektrolyten (beispielsweise saurer Kupferelektrolyt) werden Aktivmaterialpartikel (Dispersoide der Gruppen (i) oder (ii)) durch eine geeignete Baddurchmischung (beispielsweise Rühren mittels Magnetrührstäbchen, Rührgeschwindigkeit 250 - 400 U/min; Lufteinblasung) dispergiert. Die Konzentration des Dispersoids im Elektrolyten beträgt beispielsweise zwischen c = 7 und 28 g/L. Als Anode dient beispielsweise ein Kupferblech, als kathodisches Substrat wird beispielsweise polierter Edelstahl verwendet. Durch die Verwendung eines Substrats wie polierter Edelstahl, an dem die abzuscheidende Schicht schlecht haftet, ist es möglich, die abgeschiedene Dispersoid-Kupfermatrix-Hybridfolie vom Substrat rückstandsfrei zu entfernen ("Galvanoformung"). Vor der Beschichtung wird das kathodische Substrat einer geeigneten Vorbehandlung (beispielsweise Polieren, Reinigen im Ultraschallbad, elektrolytische Entfettung, Schwefelsäure-Dekapierung) unterzogen. Die Abscheidung der Dispersionsschicht erfolgt anschließend bei geeigneten Stromdichten (beispielsweise i = 4 - 5 A/dm²) und Versuchszeiten von beispielsweise t = 10 - 45 min. Nach Ende der Beschichtungszeit wird die entstandene Schicht durch Spülen mit demin. Wasser von Elektrolyt- und Dispersoid-Resten befreit und getrocknet.

### Ausführungsbeispiel 3:

Aus 1400 mL demin. Wasser, 200 mL konzentrierter Schwefelsäure (Merck KGaA, Darmstadt), 100 g Kupfersalz FG (Slotocoup Cu 40, Dr.Ing. Max Schlötter GmbH & Co. KG, Geislingen) und 0,3 mL konzentrierter Salzsäure (Merck KGaA, Darmstadt) werden durch Lösen in und weiteres Auffüllen mit demin. Wasser 2 L schwefelsaurer Kupferelektrolyt (ohne Zusätze) hergestellt. In 500 mL dieses Elektrolyten werden 3,5 g Polythiophen-funktionalisierte Schwefelpartikel (vgl. Ausführungsbeispiel 1) durch Rühren mittels Magnetrührstäbchen dispergiert. Die Rührgeschwindigkeit beträgt 250 U/min. Die Beschichtungen werden in einer Kristallisationsschale mit d = 11,5 cm Durchmesser durchgeführt. Als Anode dient ein Kupferblech (Grundfläche 70 mm x 30 mm), als Kathode ein Edelstahlblech (1.4301, poliert, beschichtete Fläche 60 mm x 28 mm). Um eine optimierte Stromdichteverteilung zu erzielen und eine optimale Strömung im Bereich der Kathode zu erreichen, wurde diese direkt an die Behälterwand angelegt. Die Anode wurde im selben Radius gebogen und in einem Abstand von d = 8 cm dazu angebracht.

Vor Versuchsbeginn wird die Kathode jeweils für t = 30 s im Ultraschallbad (Entfetter Slotoclean AK 340, Dr. Ing. Max Schlötter GmbH & Co. KG, Geislingen), in der elektrolytischen Entfettung (Entfetter Slotoclean EL DCG, Dr.Ing. Max Schlötter GmbH & Co. KG, Geislingen; ϑ = 35 °C, I = 2 A, i = 6 A/dm²) sowie in der Schwefelsäure-Dekapierung (Schwefelsäure, technisch, 10%, Merck KGaA, Darmstadt) vorbehandelt und anschließend getrocknet. Die Beschichtung erfolgt bei einer Stromstärke von I = 0,67 A (entspricht i = 4 A/dm²) für einen Zeitraum von t = 33 min. Während des Beschichtungsvorgangs wird der Elektrolyt weiterhin mit der gleichen Rührgeschwindigkeit gerührt. Anschließend wird das Kathodenblech mit demin. Wasser sowie Isopropanol gespült und getrocknet. Die entstandene Dispersoid-Kupfermatrix-Hybridfolie kann danach im gut haftenden Randbereich mit einem Skalpell mechanisch abgelöst und vorsichtig vom Kathodenblech abgezogen werden.

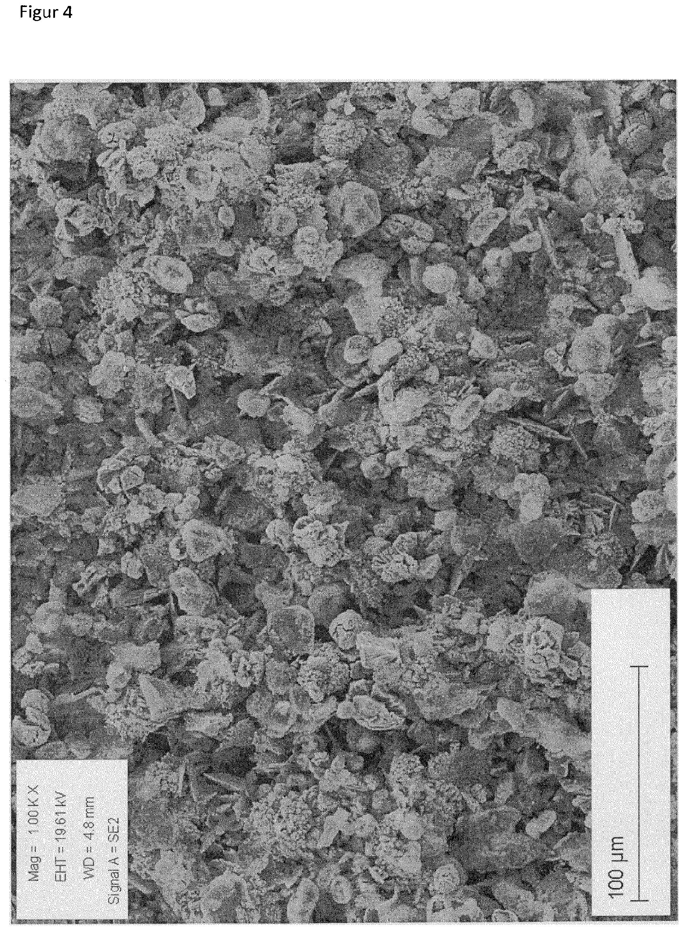

Fig. 4 zeigt die REM-Aufnahme einer derart hergestellten Folienverbundmaterialfolie mit Polythiophen-funktionalisierten Schwefelpartikeln; Beschichtungsdauer: t = 33 min; Schwefelgehalt in der Schicht (bestimmt per EDX): ca. 19 Gew.-%; Vergrößerung: 1000-fach.

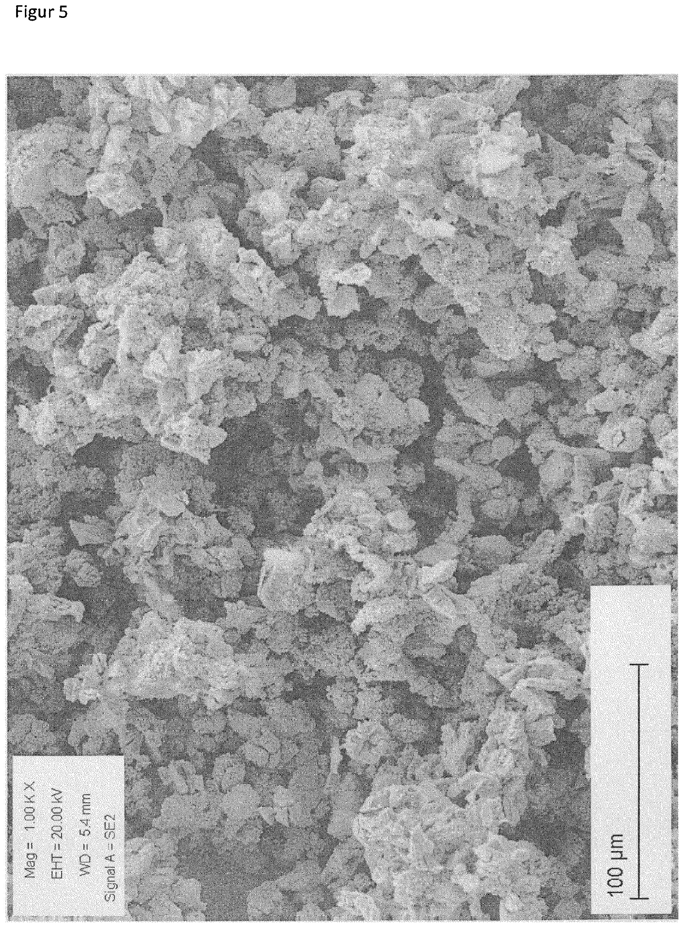

Fig. 5 zeigt die REM-Aufnahme einer in Anlehnung an Ausführungsbeispiel 3 hergestellten Folienverbundmaterialfolie mit Polypyrrol-funktionalisierten Schwefelpartikeln; Beschichtungsdauer t = 20 min; Schwefelgehalt in der Schicht (bestimmt per EDX): ca. 3 Gew.-%; Vergrößerung: 1000-fach.

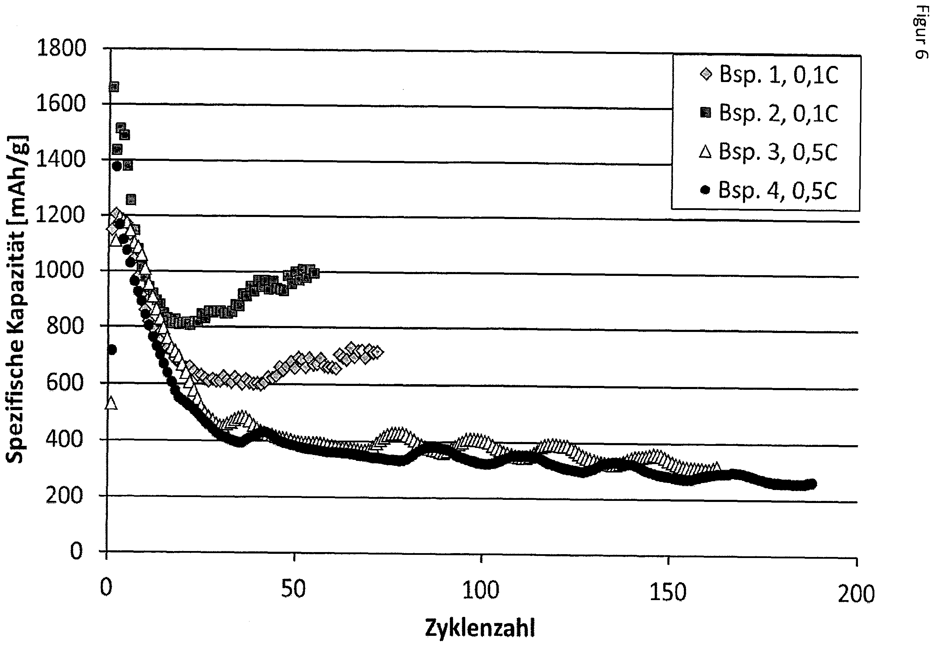

Fig. 6 zeigt die auf die Schwefelmasse bezogene, spezifische Kapazität in Abhängigkeit der Zyklenzahl für eine solche Kathode, bestehend aus Dispersoid-Kupfermatrix-Hybridfolie mit Pyrrol-funktionalisieren Schwefel-Partikeln.

### Ausführungsbeispiel 4: Abscheidung von LiFePO₄ aus einem Kupferpyrophosphatelektrolyten

Aus 110 g Kupferpyrophosphat (Cu₂P₂O₇ * x H₂O, Sigma-Aldrich Chemie GmbH, Taufkirchen), 400 g Kaliumpyrophosphat (K₄P₂O₇, Sigma-Aldrich Chemie GmbH, Taufkirchen), 10 g Citronensäure (Merck KGaA, Darmstadt) und 3 g Ammoniak (25 %, Merck KGaA, Darmstadt) wird durch Lösen in und Auffüllen mit demin. Wasser 1 L Kupferelektrolyt hergestellt. In 300 mL dieses Elektrolyten werden 2 g Lithiumeisenphosphat (LiFePO₄, Pulver, Partikelgröße <5 µm (BET), Sigma-Aldrich Chemie GmbH, Taufkirchen) durch Rühren mittels Magnetrührstäbchen dispergiert. Die Rührgeschwindigkeit beträgt 375 U/min. Die Beschichtungen werden in einer Kristallisationsschale mit einem Durchmesser von d = 11,5 cm durchgeführt. Als Anode dient ein Kupferblech (Grundfläche 60 mm x 35 mm), als Kathode ein Edelstahlblech (1.4301, poliert, beschichtete Fläche 60 mm x 35 mm). Zur Erhöhung des Einlagerungsvolumens wird das Kathodenblech im unteren Bereich leicht nach innen gebogen.

Vor Versuchsbeginn wird die Kathode jeweils für t = 30 s im Ultraschallbad (Entfetter Slotoclean AK 340, Dr.Ing. Max Schlötter GmbH & Co. KG, Geislingen), in der elektrolytischen Entfettung (Entfetter Slotoclean EL DCG, Dr.Ing. Max Schlötter GmbH & Co. KG, Geislingen; ϑ = 35 °C, I = 2 A, i = 5 A/dm²) sowie in der Schwefelsäure-Dekapierung (Schwefelsäure, technisch, 10%, Merck KGaA, Darmstadt) vorbehandelt und anschließend getrocknet. Das Kathodenblech wird zunächst in einem schwefelsaurensauren Kupferelektrolyten (vgl. Ausführungsbeispiel 3, Stromdichte i = 3 A/dm², Stromstärke I = 0,54 A, Beschichtungsdauer t = 15 min) vorverkupfert. Anschließend wird die Dispersionsabscheidung im Kupferpyrophosphatelektrolyten durchgeführt. Die Beschichtung erfolgt bei einer Stromstärke von I = 0,18 A (entspricht i = 0,86 A/dm²) für einen Zeitraum von t = 22,5 min. Während des Beschichtungsvorgangs wird der Elektrolyt weiterhin mit der gleichen Rührgeschwindigkeit gerührt. Anschließend wird das Kathodenblech mit demin. Wasser sowie Isopropanol gespült und getrocknet. Die entstandene Dispersoid-Kupfermatrix-Hybridfolie kann danach im gut haftenden Randbereich mit einem Skalpell mechanisch abgelöst und vorsichtig vom Kathodenblech abgezogen werden.

### Ausführungsbeispiel 5: Abscheidung von NiO aus einem Nickelelektrolvten nach Watts (nicht erfindungsgemäß)

Aus 310 g Nickelsulfat (NiSO₄ * 6 H₂O, Merck KGaA, Darmstadt), 50 g Nickelchlorid (NiCl * 6 H₂O, Merck KGaA, Darmstadt) und 40 g Borsäure (B(OH)₃, Merck KGaA, Darmstadt) wird durch Lösen in und Auffüllen mit demin. Wasser unter Erwärmen auf ϑ = 60 °C eine Lösung von Nickelelektrolyt (ohne Zusätze) mit V = 1 L hergestellt. In 300 mL dieses Elektrolyten werden 3 g Nickeloxid (NiO, Nanopulver, Partikelgröße <50 nm (TEM), Sigma-Aldrich Chemie GmbH, Taufkirchen) durch Rühren mittels Magnetrührstäbchen dispergiert. Die Rührgeschwindigkeit beträgt 375 U/min. Die Beschichtungen werden in einer Kristallisationsschale mit d = 11,5 cm Durchmesser bei Raumtemperatur durchgeführt. Als Anode dient ein Nickelblech (Grundfläche 50 mm x 35 mm), als Kathode ein Edelstahlblech (1.4301, poliert, beschichtete Fläche 50 mm x 35 mm).

Vor Versuchsbeginn wird die Kathode jeweils für t = 30 s im Ultraschallbad (Entfetter Slotoclean AK 340, Dr. Ing. Max Schlötter GmbH & Co. KG, Geislingen), in der elektrolytischen Entfettung (Entfetter Slotoclean EL DCG, Dr.Ing. Max Schlötter GmbH & Co. KG, Geislingen, ϑ = 35 °C, I = 2 A, i = 6 A/dm²) sowie in der Schwefelsäure-Dekapierung (Schwefelsäure, technisch, 10%, Merck KGaA, Darmstadt) vorbehandelt und anschließend getrocknet. Die Beschichtung erfolgt bei einer Stromstärke von I = 0,52 A (entspricht i = 3 A/dm²) für einen Zeitraum von t = 17 min. Während des Beschichtungsvorgangs wird der Elektrolyt weiterhin mit der gleichen Rührgeschwindigkeit gerührt. Anschließend wird das Kathodenblech mit demin. Wasser sowie Isopropanol gespült und getrocknet. Die entstandene Dispersoid-Nickelmatrix-Hybridfolie kann danach im gut haftenden Randbereich mit einem Skalpell mechanisch abgelöst und vorsichtig vom Kathodenblech abgezogen werden.

### Aufbau einer beispielhaften Batterie-Testzelle

### Kathode:

Als Kathodenmaterial inklusive Stromsammler wird das im Ausführungsbeispiel 3 erhaltene Material verwendet. Mit Hilfe einer Präzisionshandstanze ("Handheld Punch" der Fa. Nogamigiken, Japan) wird eine Scheibe mit 10 mm Durchmesser ausgestanzt.

### Anode:

Lithium-Folie (Alfa Aesar mit 99,9 %iger Reinheit). Die Folienstärke beträgt 1,5 mm.

### Separator:

Celgard 2500. Aus dem Rohmaterial werden kreisrunde Membranen mit einem Durchmesser von 12 mm ausgestanzt. Wenn der Separator beispielsweise einen 2 mm größeren Durchmesser als die Anode und Kathode hat, wird sichergestellt, dass sich diese nicht berühren (Vermeidung eines internen Kurzschlusses).

### Elektrolyt:

Leitsalz: Lithiumhexafluorophosphat (LiPF₆) (Sigma-Aldrich, Reinheit: 99,99+%)
Zusatz: Lithiumnitrat (LiNO₃) (Merck, Reinheit: ≥99,995%)
Aprotisches Lösungsmittel: Triethylenglycoldimethylether (TEGDME) (Merck, Reinheit: ≥98%).
c(LiPF₆) = 1 mol/l, *c*(LiNO₃) = 0,75 mol/l

Die Herstellung und Aufbewahrung des Elektrolyten erfolgt unter ArgonAtmosphäre in der Glovebox.

### Aufbau eines Lithium-Schwefel-Zellen Gehäuse:

Das Batteriegehäuse besteht aus dem Verschraubungskörper, jeweils zwei Stromkollektorbolzen, zwei Überwurfmuttern, zwei inneren und zwei äußeren Klemmringen innerhalb der Überwurfmutter sowie einer Schraubenfeder und einem Kathodenkontakt.
(1) In der Glovebox wird der Stromkollektorbolzen mit der Anschlussseite nach außen in das Verschraubungsgehäuse eingeführt, gefolgt vom inneren und äußeren Klemmring und der Überwurfmutter. Die Überwurfmutter wird so verschlossen, dass die Länge des sichtbaren Teils des Stromkollektorbolzens und der Überwurfmutter 30-50 mm beträgt.
(2) In das Verschraubungsgehäuse wird das Kathodenmaterial mittig eingelegt.
(3) Mit einer Mikropipette werden dann 7 µl des vorgefertigten Elektrolyten zentral auf die Kathode gegeben.
(4) Anschließend wird der Separator (12 mm) in dem Verschraubungsgehäuse auf der Kathode angeordnet.
(5) Mit einer Mikropipette werden weitere 7 µl des vorgefertigten Elektrolyten zentral auf den Separator gegeben.
(6) Vom Lithium wird mit einem Locheisen ein Plättchen von 10 mm Durchmesser ausgestanzt.
(7) Die Lithium-Anode wird mit der zuvor gereinigten Seite Richtung Separator eingebracht.
(8) Anschließend wird der zweite Stromkollektorbolzen in das Gehäuse eingeführt.
(9) Über den Stromkollektorbolzen wird zuerst der zweite innere, gefolgt vom zweiten äußeren Klemmring und der zweiten Überwurfmutter gestülpt. Beim Festschrauben der Überwurfmutter wird darauf geachtet, dass die beiden Enden der Stromkollektorbolzen einen Abstand von 80 mm haben.

### Batterietest:

Die Batterien werden galvanostatisch getestet, d.h. ausgehend vom geladenen Zustand der Batterie wird die Zelle mit konstantem Strom belastet. Dabei sinkt im Laufe der Entladung die Batteriespannung ab. Wenn die Batteriespannung auf beispielsweise 1,3 V gefallen ist, wird die Stromrichtung sofort durch die Software geändert. Die Batterie wird nun geladen. Dabei steigt die Spannung der Batterie an. Sobald die Batteriespannung beispielsweise 2,8 V erreicht, wird diese konstant gehalten, bis der Ladestrom auf 10% absinkt (oder eine Wartezeit von 30 min erreicht worden ist). Danach beginnt ein neuer Zyklus.

Entlade- und Ladeschlussspannung sind bei allen Versuchen beispielsweise 1,3 V und 2,8 V. Die Stromstärke hängt von der Schwefel-Beladung und von der gewünschten C-Rate ab und beträgt beispielsweise 167 mA/g (0,1 C), 334 mA/g (0,2 C), 502 mA/g (0,3 C), 836 mA/g (0,5 C). Was die C-Rate betrifft, so ist in der Batterietechnik die Stromdichte nicht flächenbezogen, sondern normiert auf die Masse des Aktivmaterials. Wird die Stromdichte so gewählt, dass das auf der Elektrode vorhandene Aktivmaterial innerhalb einer Stunde vollständig umgesetzt wird, beträgt die Rate 1C. Wird das Aktivmaterial innerhalb 1h/x vollständig umgesetzt, beträgt die Rate xC.

## Patentansprüche

1. Verfahren zur Herstellung eines Folienverbundmaterials mit einer Dicke im Bereich von 5 bis 50 µm, welches in einer Batterie gleichzeitig die Funktion als Stromsammler und als Elektrodenmaterial, insbesondere Kathodenmaterial, ausüben kann, wobei das Folienverbundmaterial eine Dispersoid-Metallmatrix-Hybridfolie ist, wobei das Dispersoid ein Aktivmaterial, ausgewählt aus
(i) Schwefel, Selen, Schwefel/Selen-Verbindungen, ausgewählt aus SesS, Se₅S₂, Se₅S₄, SeS, Se₃S₅, SeS₂, SeS₇ und SeS₂₀, oder Li₂Sₙ mit 1≤n≤8, oder
(ii) Lithiuminterkalationsverbindungen, ausgewählt aus LiMPO₄ mit M = Fe, Mn, Co, Ni und deren Mischungen; LiMO₂ mit M = Ni, Co, Mn und deren binäre bzw. ternäre Mischungen; LiNi_{1-y-z}Co_{y}M_{z}O₄ mit M = Mg, Al, Mn, y+z = 0-1; LiNi_{y}Mn_{y}Co_{1-2y}O₂ mit y=0-0,5; LiM_{1-y}[Li_{1/3}Mn_{2/3}]_{y}O₂ mit M = Cr, Mn, Fe, Co, Ni oder deren Mischungen, y = 0-1; LiM₂O₄ mit M = Mn, Ti, V, wobei diese teilweise durch ein oder mehrere andere Übergangsmetallionen ersetzt sein können; LiₓV₂O₅ mit 0<x≤3; oder LiₓV₆O₁₃ mit 0<x≤6; und
die Metallmatrix ein elektrisch leitfähiges Material, ausgewählt aus Metallen oder metallischen Legierungen, umfasst, mit der Maßgabe, dass kein zusätzliches Bindematerial und keine zusätzlichen elektrisch leitfähigen Füllpartikel in dem Folienverbundmaterial vorhanden sind,
umfassend eine Kombination von Galvanoformung und Dispersionsabscheidung, worin bei der Galvanoformung in den Elektrolyten, aus welchem das die Metallmatrix aufbauende elektrisch leitfähige Material erzeugt wird, zusätzlich das Dispersoid eingebracht wird, so dass das Dispersoid bei der Galvanoformung mit in die sich abscheidende Schicht der Metallmatrix eingelagert wird, und anschließend die abgeschiedene Schicht als Folie vom dem entsprechenden Trägermaterial, auf welches sie abgeschieden wird, abgezogen wird.

2. Verfahren gemäß Anspruch 1, wobei die Konzentration des Dispersoids in dem Elektrolyten im Bereich von 5 bis 100 g/L liegt.

3. Verfahren gemäß Anspruch 1 oder 2, wobei die Schichtabscheidung bei Stromdichten im Bereich von bis zu 100 A/dm² durchgeführt wird.

4. Verfahren gemäß einem der Ansprüche 1 bis 3, wobei das Folienverbundmaterial im Rahmen der Kombination von Galvanoformung und Dispersionsabscheidung auf einem Kathodenblech, ausgewählt aus hochlegiertem Stahl oder Titan, abgeschieden wird und nach Beendigung der Abscheidung von diesem entfernt wird.

5. Verfahren gemäß einem der Ansprüche 1 bis 4, wobei das Aktivmaterial durch Kompositbildung mit einem intrinsisch leitfähigen organischen Polymer funktionalisiert worden ist.

6. Verfahren gemäß Anspruch 5, wobei das intrinsisch leitfähige organische Polymer aus Polythiophen, Polypyrrol, Polyanilin, Polyacetylen, Poly(para-phenylen), Poly(para-phenylen-vinylen), Poly[1,4-di(1,3-dithiolan-2-yl)-benzol] (PDDTB) oder Poly(2,2'-dithioanilin) (PDTDA) ausgewählt ist.

7. Verfahren gemäß einem der Ansprüche 1 bis 6, wobei als Dispersoid funktionalisierte Schwefelpartikel eingesetzt werden.

8. Verfahren gemäß Anspruch 7, wobei die Funktionalisierung der Schwefelpartikel durch Kompositbildung mit Oligo- bzw. Polythiophen oder Oligo- bzw. Polypyrrol erzeugt worden ist.

9. Verfahren gemäß Anspruch 8, wobei der Anteil der funktionalisierten Schwefelpartikel in dem Folienverbundmaterial im Bereich von 10-40 Gew.-%, bezogen auf das Gewicht des Folienverbundmaterials, liegt.

10. Verfahren gemäß einem der Ansprüche 1 bis 9, wobei die Metallmatrix aus Kupfer, Nickel, Zinn, Cobalt, Eisen, Silber oder Aluminium oder Gemischen von zwei oder mehreren davon oder Gemischen mit anderen Metallen oder Nichtmetallen, vorzugsweise aus Aluminium, Kupfer oder Nickel, gebildet ist.

11. Folienverbundmaterial, erhältlich durch das Verfahren nach einem der Ansprüche 1 bis 10.

12. Verwendung des Folienverbundmaterials gemäß Anspruch 11 als Kathode und Stromsammler zugleich in einer Lithium-Schwefel-Batterie, wobei das Dispersoid aus der Gruppe (i) ausgewählt ist.

13. Verwendung des Folienverbundmaterials gemäß Anspruch 11 als Kathode und Stromsammler zugleich in einer Lithium-Ionen-Batterie, wobei das Dispersoid aus der Gruppe (ii) ausgewählt ist.

14. Lithium-Schwefel-Batterie, umfassend das Folienverbundmaterial gemäß Anspruch 11, wobei das Dispersoid aus der Gruppe (i) ausgewählt ist, wobei das Folienverbundmaterial als Kathode und Stromsammler zugleich in der Lithium-Schwefel-Batterie dient.

15. Lithium-Ionen-Batterie, umfassend das Folienverbundmaterial gemäß Anspruch 11, wobei das Dispersoid aus der Gruppe (ii) ausgewählt ist, wobei das Folienverbundmaterial als Kathode und Stromsammler zugleich in der Lithium-Ionen-Batterie dient.

## Claims

1. A process for producing a composite film material having a thickness of 5 to 50 µm, which can simultaneously function as a current collector or as an electrode material, in particular cathode material, in a battery, the composite film material being a dispersoid-metal matrix hybrid film, wherein the dispersoid is an active material, selected from
(i) sulfur, selenium, sulfur/selenium-compounds, selected from Se₅S, Se₅S₂, Se₅S₄, SeS, Se₃Se₅, SeS₂, SeS₇ and SeS₂₀, or Li₂Sₙ with 1≤n≤8, or
(ii) lithium intercalation compounds, selected from LiMPO₄ with M = Fe, Mn, Co, Ni and their mixtures; LiMO₂ with M = Ni, Co, Mn and their binary or ternary mixtures; LiNi_{1-y-z}CO_{y}M_{z}O₄ with M = Mg, Al, Mn, y+z = 0-1; LiNi_{y}Mn_{y}Co_{1-2y}O₂ with y = 0-0,5; LiM_{1-y}[Li_{1/3}Mn_{2/3}]_{y}O₂ with M = Cr, Mn, Fe, Co, Ni or their mixtures, y = 0-1; LiM₂O₄ with Mn, Ti, V, where these can partially be replaced by one or more transition metal ions; LiₓV₂O₅ with 0<x≤3; or LiₓV₆O₁₃ with 0<x≤6, and
the metal matrix comprises an electrically conductive material selected from metals or metallic alloys, with the proviso that no additional binder material and no additional electrically conductive filler particles are present in the composite film material,
comprising a combination of electroforming and dispersion deposition, where in the electroforming the dispersoid is additionally introduced in the electrolyte from which the metal matrix constituting electrically conductive material is produced, so that the dispersoid is incorporated into the depositing layer of the metal matrix during the electroforming, and subsequently the deposited layer is taken-off as a film from the corresponding support material onto which it is deposited.

2. The process according to claim 1 wherein the concentration of the dispersoid in the electrolyte is in the range of 5 to 100 g/L.

3. The process according to claim 1 or 2, wherein the layer deposition is carried out at current densities in the range of up to 100A/dm².

4. The process according to any one of claims 1 to 3, wherein the composite film material is deposited by a combination of electroforming and dispersion deposition on a cathode sheet selected from high alloy steel or titanium and removed therefrom after completion of the deposition.

5. The process according to any one of claims 1 to 4, wherein the active material has been functionalized by composite formation with an intrinsically conductive organic polymer.

6. The process according to claim 5 wherein the intrinsically conductive organic polymer is selected from polythiophene, polypyrrole, polyaniline, polyacetylene, poly(para-phenylene), poly(para-phenylene-vinylene), poly[1,4-di(1,3-dithiolane-2-yl)-benzene] (PDDTB) or poly(2,2'-dithioaniline) (PDTDA).

7. The process according to any one of claims 1 to 6, wherein functionalized sulfur particles are used as dispersoid.

8. The process according to claim 7, wherein the functionalization of the sulfur particles has been produced by composite formation with oligo-or polythiophene or oligo-or polypyrrole.

9. The process according to claim 8, wherein the proportion of functionalized sulfur particles in the composite film material is in the range of 10-40% by weight, based on the weight of the composite film material.

10. The process according to any one of claims 1 to 9, wherein the metal matrix is formed from copper, nickel, tin, cobalt, iron, silver or aluminum or mixtures of two or more thereof or mixtures with other metals or non-metals, preferably from aluminum, copper or nickel.

11. Composite film material obtainable by the process according to any one of claims 1 to 10.

12. Use of the composite film material according to claim 11 as cathode and current collector at the same time in a lithium-sulfur-battery, wherein the dispersoid is selected from the group (i).

13. Use of the composite film material according to claim 11 as cathode and current collector at the same time in a lithium-ion-battery, wherein the dispersoid is selected from the group (ii).

14. Lithium-sulfur-battery, comprising the composite film material according to claim 11, wherein the dispersoid is selected from the group (i), wherein the composite film material serves as cathode and current collector at the same time in the lithium-sulfur-battery.

15. Lithium-ion-battery, comprising the composite film material according to claim 11, wherein the dispersoid is selected from the group (ii), wherein the composite film material serves as cathode and current collector at the same time in the lithium-ion battery.

## Revendications

1. Procédé pour la fabrication d'une feuille en matériau composite ayant une épaisseur dans la gamme de 5 à 50 µm, qui dans une pile peut exercer simultanément la fonction de collecteur de courant et de matériau d'électrode, notamment de matériau de cathode, la feuille en matériau composite étant une feuille hybride à base d'une matière dispersée et d'une matrice métallique, la matière dispersée étant un matériau actif choisi parmi
(i) le soufre, le sélénium, des composés du soufre et du sélénium, choisis parmi Se₅S, Se₅S₂, Se₅S₄, SeS, Se₃S₅, SeS₂, SeS₇ et SeS₂₀, ou Li₂Sₙ (1≤ n ≤ 8), ou
(ii) des composés d'intercalation à base de lithium, choisis parmi LiMPO₄, M étant Fe, Mn, Co, Ni, et des mélanges de ceux-ci ; LiMO₂, M étant Ni, Co, Mn et des mélanges binaires ou tertiaires de ceux-ci ; LiNi_{1-y-z}Co_{y}M_{z}O₄, M étant Mg, Al, Mn, y + z = 0 - 1 ; LiNi_{y}Mn_{y}Co_{1-2y}O₂, y = 0 - 0,5 ; LiM_{1-y}(Li_{1/3}Mn_{2/3})_{y}O₂, M étant Cr, Mn, Fe, Co, Ni ou des mélanges de ceux-ci, y = 0-1 ; LiM₂O₄, M étant Mn, Ti, V, ceux-ci pouvant être remplacés partiellement par un ou plusieurs ions de métaux transitoires ; LiₓV₂O₅ (0 < x ≤ 3); ou LiₓV₆O₁₃ (0 < X ≤ 6) ; et
la matrice métallique comportant un matériau conducteur électrique, choisi parmi les métaux ou alliages métalliques, il étant entendu qu'aucun liant supplémentaire ni de charge supplémentaire conductrice électrique n'est présent dans la feuille en matériau composite,
procédé comportant une combinaison d'électroformage et de séparation de dispersions, dans lequel au cours de l'électroformage on introduit la matière dispersée dans l'électrolyte, à partir duquel on génère le matériau conducteur électrique qui constitue la matrice métallique de telle sorte que la matière dispersée est logée dans la couche de la matrice métallique qui se dépose pendant l'électroformage, et dans lequel on retire ensuite la couche déposée comme une feuille du matériau de support correspondant sur lequel elle s'est déposée.

2. Procédé selon la revendication 1 dans lequel la concentration de la matière dispersée dans l'électrolyte est dans la gamme de 5 à 100 g/L.

3. Procédé selon la revendication 1 ou 2 dans lequel le dépôt de la couche est effectué à des densités de courant dans la gamme allant jusqu'à 100 A/dm2.

4. Procédé selon l'une des revendications 1 à 3 dans lequel le matériau composite en feuille se dépose, dans le cadre de la combinaison d'électroformage et de séparation de dispersion, sur une feuille de cathode choisie parmi des feuilles en acier hautement allié ou en titane, et dans lequel on le retire celle-ci après la fin du dépôt.

5. Procédé selon l'une des revendications 1 à 4 dans lequel le matériau actif a été fonctionnalisé par formation d'un composite avec un polymère organique intrinsèquement conducteur.

6. Procédé selon la revendication 5 dans lequel le polymère organique intrinsèquement conducteur est choisi parmi le polythiophène, le polypyrrole, la polyaniline, le polyacétylène, le poly(para-phénylène), le poly(para-phénylèn-vinylène), le poly(1,4-di(1,3-dithiolan-2-yl)-benzène) (PDDTB) ou le poly(2,2'-dithioaniline) (PDTDA).

7. Procédé selon l'une des revendications 1 à 6 dans lequel on utilise à titre de matière dispersée des particules de soufre fonctionnalisées.

8. Procédé selon la revendication 7 dans lequel on effectue la fonctionnalisation des particules de soufre par formation de composite avec du oligothiophène ou du polythiophène, de l'oligopolypyrrole ou du polypyrrole.

9. Procédé selon la revendication 8 dans lequel la fraction des particules de soufre fonctionnalisées dans la feuille de matériau composite est dans la gamme de 10 - 40 % en poids, par rapport au poids de la feuille en matériau composite.

10. Procédé selon l'une des revendications 1 à 9 dans lequel la matrice métallique est formée de cuivre, de nickel, d'étain, de cobalt, de fer, d'argent ou d'aluminium ou de mélanges de deux ou plusieurs de ceux-ci ou de mélanges avec d'autres métaux ou non-métaux, de préférence en aluminium, cuivre ou nickel.

11. Feuille de matériau composite obtenable par le procédé selon l'une des revendications 1 à 10.

12. Utilisation de la feuille de matériau composite selon la revendication 11 simultanément comme cathode et collecteur de courant dans une pile à base de lithium-soufre, la matière dispersée étant choisie parmi le groupe (i).

13. Utilisation de la feuille de matériau composite selon la revendication 11 simultanément comme cathode et collecteur de courant dans une pile à base de lithium-ions, la matière dispersée étant choisie parmi le groupe (ii).

14. Pile à base de lithium-soufre comportant la feuille de matériau composite selon la revendication 11 dans laquelle la matière dispersée est choisie parmi le groupe (i), ladite feuille en matériau composite servant simultanément de cathode et de collecteur de courant dans la pile à base de lithium-soufre.

15. Pile à base de lithium-ions comportant la feuille de matériau composite selon la revendication 11 dans laquelle la matière dispersée est choisie parmi le groupe (ii), ladite feuille en matériau composite servant simultanément de cathode et de collecteur de courant dans la pile à base de lithium-ions.
